# EUROPEAN PATENT APPLICATION

(11) **EP 4 730 407 A1**
(43) Date of publication of application: **22.04.2026**
(21) Application number: 25196587.7
(22) Date of filing: 19.08.2025
(51) Int. Cl.: H01M 4/04, H01M 4/134, H01M 4/1395, H01M 4/38, H01M 4/62, H01M 10/0525, H01M 10/0562

(54) **ELECTRODE ACTIVE MATERIAL COMPOSITE PARTICLE, METHOD FOR MANUFACTURING ELECTRODE ACTIVE MATERIAL COMPOSITE PARTICLE, ELECTRODE MIXTURE, AND BATTERY**

(30) Priority: 17.10.2024 JP 2024182134
(71) Applicant: TOYOTA JIDOSHA KABUSHIKI KAISHA, Toyota-shi, Aichi-ken 471-8571 (JP)
(72) Inventor: Nomoto, Kazushige, Toyota-shi, Aichi-ken,, 471-8571 (JP); Furuya, Ryosuke, Toyota-shi, Aichi-ken,, 471-8571 (JP); Nakai, Takaaki, Toyota-shi, Aichi-ken,, 471-8571 (JP); Nakamoto, Hirofumi, Toyota-shi, Aichi-ken,, 471-8571 (JP); Yokoi, Yuma, Toyota-shi, Aichi-ken,, 471-8571 (JP); Kudo, So, Toyota-shi, Aichi-ken,, 471-8571 (JP)
(74) Representative: Winter, Brandl - Partnerschaft mbB

(57) **Abstract**

The present disclosure provides an electrode active material composite particle and a method for manufacturing the electrode active material composite particle that can suppress a change in volume of a battery, an electrode mixture including such an electrode active material composite particle, and a battery containing such an electrode mixture. An electrode active material composite particle according to the present disclosure includes a particulate electrode active material and a fibrous filler. In the electrode active material composite particle according to the present disclosure, the particulate electrode active material includes an alloy-based electrode active material, the fibrous filler constitutes a plurality of aggregates, and the plurality of aggregates and the particulate electrode active material constitute a composite particle.

## Description

### FIELD

The present disclosure relates to an electrode active material composite particle, a method for manufacturing the electrode active material composite particle, an electrode mixture, and a battery.

### BACKGROUND

As disclosed in PTLs 1 and 2, a technique for combining silicon, tin, or an oxide thereof as an electrode active material into a composite particle is known.

An alloy-based electrode active material such as silicon and tin expands and contracts due to charging/discharging of a battery, and thus changes in volume of the battery occurs.

### [CITATION LIST]

### [PATENT LITERATURE]

[PTL 1] Japanese Unexamined Patent Publication (Kokai) No. 2019-121557
[PTL 2] Japanese Unexamined Patent Publication (Kokai) No. 2021-057216

### SUMMARY

### [TECHNICAL PROBLEM]

In the battery including the alloy-based electrode active material, there is room for improvement from a viewpoint of suppressing a change in volume of the battery.

The present disclosure has an objective to provide an electrode active material composite particle and a method for manufacturing the electrode active material composite particle that can suppress a change in volume of a battery, an electrode mixture including such an electrode active material composite particle, and a battery containing such an electrode mixture.

### [SOLUTION TO PROBLEM]

The present inventors have found that the problems described above can be solved by the following means.

### <Aspect 1>

An electrode active material composite particle including:
a particulate electrode active material; and
a fibrous filler, wherein
the particulate electrode active material includes an alloy-based electrode active material,
the fibrous filler constitutes a plurality of aggregates, and
the plurality of aggregates and the particulate electrode active material constitute a composite particle.

### <Aspect 2>

The electrode active material composite particle according to aspect 1, wherein
the particulate electrode active material includes a silicon particle.

### <Aspect 3>

The electrode active material composite particle according to aspect 2, wherein
the silicon particle is a porous silicon particle, and
a mass percentage of the fibrous filler to the porous silicon particle is 3 mass% or more and 50 mass% or less.

### <Aspect 4>

The electrode active material composite particle according to any one of aspects 1 to 3, wherein
a fiber diameter of the fibrous filler is 1,000 nm or less.

### <Aspect 5>

The electrode active material composite particle according to any one of aspects 1 to 4, wherein
a fiber length of the fibrous filler is 100 µm or less.

### <Aspect 6>

The electrode active material composite particle according to any one of aspects 1 to 5, wherein
an aspect ratio of the fibrous filler is 5 or more and 10,000 or less.

### <Aspect 7>

The electrode active material composite particle according to any one of aspects 1 to 6, wherein
the fibrous filler is fibrous carbon, fibrous elemental metal, a fibrous metal compound, or a combination thereof.

### <Aspect 8>

The electrode active material composite particle according to aspect 7, wherein
the fiber carbon is vapor-grown carbon fiber.

### <Aspect 9>

The electrode active material composite particle according to any one of aspects 1 to 8, further including
a binder.

### <Aspect 10>

An electrode mixture including
the electrode active material composite particle according to any one of aspects 1 to 9.

### <Aspect 11>

The electrode mixture according to aspect 10 further including
a solid electrolyte.

### <Aspect 12>

The electrode mixture according to aspect 11, wherein
the solid electrolyte is a sulfide solid electrolyte.

### <Aspect 13>

A battery including
an electrode active material layer, wherein
the electrode active material layer contains the electrode mixture according to any one of aspects 10 to 12.

### <Aspect 14>

The battery according to aspect 13, which is a solid battery.

### <Aspect 15>

A method for manufacturing the electrode active material composite particle according to any one of aspects 1 to 9, the method including the following steps:
providing slurry including the particulate electrode active material, the fibrous filler, and a dispersion medium; and
drying and removing the dispersion medium by spray drying, and forming the composite particle.

### ADVANTAGEOUS EFFECTS OF INVENTION

The present disclosure can provide an electrode active material composite particle and a method for manufacturing the electrode active material composite particle that can suppress a change in volume of a battery, an electrode mixture including such an electrode active material composite particle, and a battery containing such an electrode mixture.

### BRIEF DESCRIPTION OF DRAWINGS

FIG. 1 is a schematic cross-sectional view illustrating one example of an electrode active material composite particle.
FIG. 2 is a schematic cross-sectional view illustrating one example of a battery of the present disclosure.

### DESCRIPTION OF EMBODIMENTS

Embodiments of the present disclosure will be described below in detail. It should be noted that the present disclosure is not limited to the embodiments below, and can be implemented while various modifications are made within the scope of the purpose of the present disclosure.

### <<Electrode Active Material Composite Particle>>

An electrode active material composite particle according to the present disclosure includes a particulate electrode active material and a fibrous filler. In the electrode active material composite particle according to the present disclosure, the particulate electrode active material includes an alloy-based electrode active material, the fibrous filler constitutes a plurality of aggregates, and the plurality of aggregates and the particulate electrode active material constitute a composite particle.

In order to suppress changes in volume in the electrode active material layer, and ultimately in the battery itself, caused by expansion and contraction of alloy-based electrode active materials such as silicon and tin during charge and discharge of the battery, various measures may be considered. For example, particulate electrode active materials containing an alloy-based electrode active material may be composited to form electrode active material composite particles, and voids formed within these composite particles may serve to absorb the expansion of the particulate electrode active materials.

The present inventors have found that, even when using electrode active material composite particles having voids, it may not always be possible to sufficiently absorb the expansion of particulate electrode active materials containing alloy-based electrode active materials. Although not intended to be bound by any theory, the reason therefor is believed to be as follows. In the case of manufacturing a solid-state battery, the electrode active material layer may be subjected to pressing for densification. During this process, it is considered that the voids formed within the electrode active material composite particles may be partially collapsed. As a result, it is believed that a sufficient amount of void space may not be maintained to absorb the expansion of the alloy-based electrode active materials.

In contrast, the present inventors have found that changes in volume in a battery associated with expansion and contraction of particulate electrode active materials during charging and discharging can be suppressed when electrode active material composite particles are formed from aggregates of a plurality of fibrous fillers and particulate electrode active materials containing an alloy-based electrode active material. Although not intended to be bound by any theory, the reason therefor is believed to be as follows. In the electrode active material composite particles of the present disclosure, the aggregates of fibrous fillers function as pillars, thereby allowing voids to be maintained within the electrode active material composite particles. As a result, it is believed that a sufficient amount of void space can be secured to absorb the expansion of the particulate electrode active materials.

With regard to the present disclosure, an "electrode active material" can be used as both of a "positive electrode active material" and a "negative electrode active material", and is particularly used as the "negative electrode active material".

Hereinafter, each element constituting the electrode active material composite particle according to the present disclosure will be described.

### <Particulate electrode active material>

The electrode active material composite particle according to the present disclosure includes the particulate electrode active material. In the electrode active material composite particle according to the present disclosure, the particulate electrode active material includes the alloy-based electrode active material.

The alloy-based electrode active material can include, for example, a silicon (Si) alloy-based electrode active material, a tin (Sn) alloy-based electrode active material, and the like, which are not limited thereto.

As the Si alloy-based electrode active material, silicon, a silicon oxide, a silicon carbide, a silicon nitride, a solid solution thereof, or the like is exemplified. Further, the Si alloy-based electrode active material may include an element other than silicon, for example, Fe, Co, Sb, Bi, Pb, Ni, Cu, Zn, Ge, In, Sn, Ti, and the like.

As the Sn alloy-based electrode active material, tin, a tin oxide, a tin nitride, a solid solution thereof, or the like is exemplified. Further, the Sn alloy-based electrode active material may include an element other than tin, for example, Fe, Co, Sb, Bi, Pb, Ni, Cu, Zn, Ge, In, Ti, Si, and the like.

The alloy-based electrode active material may include silicon. In other words, the particulate electrode active material may include a silicon particle, and may be particularly a silicon particle.

The silicon particle may be amorphous or crystalline. A crystalline phase included in the silicon particle is not particularly limited.

In the electrode active material composite particle, the silicon particle may be present as a primary particle, or may be present as a secondary particle.

An average primary particle diameter of the silicon particle may be, for example, 0.01 µm or more, 0.05 µm or more, 0.1 µm or more, or 0.5 µm or more, and 10 µm or less, 5 µm or less, 3 µm or less, 2 µm or less, or 1 µm or less.

An average secondary particle diameter of the silicon particle may be, for example, 0.1 µm or more, 1 µm or more, or 2 µm or more, and 20 µm or less, 15 µm or less, or 10 µm or less. It should be noted that the average primary particle diameter and the average secondary particle diameter can be obtained by an observation by an electron microscope such as a scanning electron microscope (SEM), and is obtained as, for example, an average value of a maximum Feret's diameter of each of a plurality of particles. The number of samples is preferably great, and is, for example, 20 or more, and may be 50 or more, or 100 or more. The average primary particle diameter and the average secondary particle diameter can be appropriately adjusted by, for example, appropriately changing a manufacturing condition of the silicon particle and executing classification processing.

The silicon particle may be a porous silicon particle. With such a configuration, expansion of silicon as the alloy-based electrode active material can also be absorbed by a pore in the porous silicon particle. The aggregate of the fibrous fillers also functions as a pillar for the pore in the porous silicon particle. Therefore, a change in volume of the battery can be more effectively suppressed.

With regard to the present disclosure, the porous silicon particle may be a particle including nanoporous silicon. Nanoporous silicon is silicon including a plurality of pores having a pore diameter of a nanometer order, for example, less than 1,000 nm, particularly 100 nm or less. The porous silicon particle may include a pore having a diameter of 55 nm or less. The pore having a diameter of 55 nm or less is less likely to be crushed even by pressing. In other words, the porous silicon particle including the pore having the diameter of 55 nm or less is more likely to maintain a porous structure even after pressing. For example, 0.21 cc or more, 0.22 cc/g or more, or 0.23 cc/g or more and 0.30 cc/g or less, 0.28 cc/g or less, or 0.26 cc/g or less of the pores having the diameter of 55 nm or less may be included per 1 g of the porous silicon particles. An amount of the pores having the diameter of 55 nm or less included in the porous silicon particles can be obtained from a pore diameter distribution by a nitrogen gas adsorption method and a DFT method, for example.

A percentage of the pores in the porous silicon particles is not particularly limited. The percentage may be, for example, 1% or more, 5% or more, 10% or more, or 20% or more, and 80% or less, 70% or less, 60% or less, 50% or less, 40% or less, or 30% or less. A percentage of voids of the silicon particles can be obtained by, for example, an observation and the like by the scanning electron microscope (SEM). The number of samples is preferably great, and is, for example, 100 or more. The percentage can be set as an average value obtained from the samples.

The particulate electrode active material may or may not include an electrode active material other than the alloy-based electrode active material.

A content of the particulate electrode active material in the electrode active material composite particle is not particularly limited, and may be, for example, 50 mass% or more, 60 mass% or more, 70 mass% or more, 75 mass% or more, 80 mass% or more, or 85 mass% or more, and less than 100 mass%, 99 mass% or less, 95 mass% or less, 90 mass% or less, or 85 mass% or less.

A content of the alloy-based electrode active material in the particulate electrode active material is not particularly limited, and may be, for example, 50 mass% or more, 60 mass% or more, 70 mass% or more, 80 mass% or more, 90 mass% or more, 95 mass% or more, 99 mass% or more, or 100 mass%. In other words, the particulate electrode active material may include only the alloy-based electrode active material as the electrode active material.

### <Fibrous Filler>

The electrode active material composite particle according to the present disclosure includes the fibrous filler. It should be noted that, with regard to the present disclosure, "fibrous" means that an aspect ratio is 3 or more.

A fiber diameter of the fibrous filler may be 1,000 nm or less. The fiber diameter may be, for example, 0.1 nm or more, 0.3 nm or more, 0.5 nm or more, 1 nm or more, 5 nm or more, 10 nm or more, 50 nm or more, 80 nm or more, 100 nm or more, 120 nm or more, 140 nm or more, or 150 nm or more, and 1,000 nm or less, 750 nm or less, 500 nm or less, 300 nm or less, 200 nm or less, or 150 nm or less.

A fiber length of the fibrous filler may be 100 µm or less. The fiber length may be, for example, 0.1 µm or more, 0.5 µm or more, 1 µm or more, 2 µm or more, 3 µm or more, 4 µm or more, 5 µm or more, and 100 µm or less, 70 µm or less, 50 µm or less, 30 µm or less, 20 µm or less, 10 µm or less, or 5 µm or less.

An aspect ratio of the fibrous filler may be 5 or more and 10,000 or less. When the aspect ratio falls within the range described above, an aggregate of the fillers described below is more easily formed. The aspect ratio may be, for example, 5 or more, 10 or more, 15 or more, 20 or more, 25 or more, 30 or more, 50 or more, 100 or more, 150 or more, 200 or more, 250 or more, 500 or more, 1,000 or more, 2,500 or more, or 5,000 or more, and 10,000 or less, 7,500 or less, 5,000 or less, 2,500 or less, 1,000 or less, 750 or less, 500 or less, 250 or less, 100 or less, 75 or less, 50 or less, 40 or less, or 35 or less.

The fibrous filler is not particularly limited, but may be, for example, fibrous carbon, fibrous elemental metal, a fibrous metal compound, or a combination thereof.

As the fibrous carbon, a carbon nanotube (CNT), vapor-grown carbon fiber (VGCF), and the like are exemplified. As the carbon nanotube, a single-layer carbon nanotube (SWCNT), and a multilayer carbon nanotube (MWCNT) are exemplified.

As metal constituting fibrous metal, nickel, aluminum, copper, iron, stainless steel, titanium, and the like are exemplified. The metals may be fibrous elemental metal, or may be a fibrous metal oxide such as titanium oxide, for example.

The fibrous filler is preferably CNT, VGCF, or titanium oxide, and is more preferably VGCF.

The particulate electrode active material may include only one kind of the fibrous filler, or may include two or more kinds.

A content of the fibrous filler in the electrode active material composite particle is not particularly limited, and may be, for example, 0.1 mass% or more, 0.5 mass% or more, 1 mass% or more, 3 mass% or more, 5 mass% or more, 6 mass% or more, 7 mass% or more, 8 mass% or more, 9 mass% or more, or 10 mass% or more, and less than 50 mass%, 40 mass% or less, 30 mass% or less, 20 mass% or less, 15 mass% or less, 14 mass% or less, 13 mass% or less, 12 mass% or less, 11 mass% or less, or 10 mass% or less.

In the electrode active material composite particle according to the present disclosure, the fibrous filler constitutes the plurality of aggregates. With regard to the present disclosure, the "aggregate" means a group of the fibrous fillers having a long side of 0.5 µm or more in a composite particle having a particle diameter of 5 µm or more when a cross-sectional reflection electron image observation at 10,000 magnifications is performed on the electrode active material composite particle. Such a cross-sectional reflection image observation can be performed by using, for example, the scanning electron microscope (SEM).

In the electrode active material composite particle according to the present disclosure, the plurality of aggregates of the fibrous fillers and the particulate electrode active material constitute the composite particle. In the composite particle, the particulate electrode active material may be a secondary particle formed of a plurality of primary particles. The plurality of aggregates of the fibrous fillers may be held in the secondary particle of the particulate electrode active material.

The electrode active material composite particle according to the present disclosure includes the void. The plurality of aggregates of the fibrous fillers also function as the void, particularly, a pillar for the void and the pore when the particulate electrode active material is the porous silicon particle.

A percentage of the voids in the electrode active material composite particle according to the present disclosure is not particularly limited, and can be appropriately set in consideration of a desired capacity of the battery, a desired expansion amount of the particulate electrode active material, and the like.

A mass percentage of the fibrous filler to the particulate electrode active material is not particularly limited, and may be, for example, 0.1 mass% or more, 0.5 mass% or more, 1 mass% or more, 3 mass% or more, 5 mass% or more, 6 mass% or more, 7 mass% or more, 8 mass% or more, 9 mass% or more, or 10 mass% or more, and less than 50 mass%, 40 mass% or less, 30 mass% or less, 20 mass% or less, 15 mass% or less, 14 mass% or less, 13 mass% or less, 12 mass% or less, 11 mass% or less, or 10 mass% or less. The mass percentage may vary according to a kind of the particulate electrode active material. For example, when the particulate electrode active material is the porous silicon particle, the mass percentage may be 3 mass% or more and 50 mass% or less, and 5 mass% or more, 6 mass% or more, 7 mass% or more, 8 mass% or more, 9 mass% or more, or 10 mass% or more, and 40 mass% or less, 30 mass% or less, 20 mass% or less, 15 mass% or less, 14 mass% or less, 13 mass% or less, 12 mass% or less, 11 mass% or less, or 10 mass% or less. When the mass percentage falls within the range described above, the fibrous filler functions as the pillar in an excellent manner, and thus a change in volume of the battery can be effectively suppressed.

### <Binder>

The electrode active material composite particle according to the present disclosure may further include a binder. In this case, the particulate electrode active material may be a secondary particle in which a plurality of particles are bound to each other via the binder. The electrode active material composite particle according to the present disclosure may be acquired by binding, via the binder, the secondary particles of the particulate electrode active materials to each other, and the secondary particle of the particulate electrode active material to the plurality of aggregates of the fibrous fillers.

A kind of the binder is not particularly limited, and may be selected from, for example, a butadiene rubber (BR)-based binder, a butylene rubber (IIR)-based binder, an acrylate butadiene rubber (ABR)-based binder, a styrene butadiene rubber (SBR)-based binder, a polyvinylidene difluoride (PVDF)-based binder, a polytetrafluoroethylene (PTFE)-based binder, a polyimide (PI)-based binder, a carboxymethyl cellulose (CMC)-based binder, a polyacrylate-based binder, a polyacrylic ester-based binder, and the like.

The binder may be particularly a PVDF-based binder. The PVDF-based binder may be a copolymer having a unit derived from a monomer other than VDF.

The electrode active material composite particle may include only one kind of the binder, or may include two or more kinds.

A content of the binder in the electrode active material composite particle is not particularly limited, and may be, for example, 1 mass% or more, 3 mass% or more, 5 mass% or more, or 10 mass% or more, and 30 mass% or less, 25 mass% or less, 20 mass% or less, or 15 mass% or less.

A mass percentage of the binder to the particulate electrode active material is not particularly limited, and may be, for example, 1 mass% or more, 3 mass% or more, 5 mass% or more, or 10 mass% or more, and 30 mass% or less, 25 mass% or less, 20 mass% or less, or 15 mass% or less.

### <Other Component>

The electrode active material composite particle according to the present disclosure may further include a component other than the components described above.

### <<Method for Manufacturing Electrode Active Material Composite Particle>>

A method according to the present disclosure for manufacturing an electrode active material composite particle includes the following steps of:
providing slurry including the particulate electrode active material, the fibrous filler, and a dispersion medium; and
drying and removing the dispersion medium by spray drying, and forming the composite particle.

The electrode active material composite particle manufactured by the method according to the present disclosure can suppress a change in volume of the battery.

### <Slurry Provision Step>

The method according to the present disclosure includes providing the slurry including the particulate electrode active material, the fibrous filler, and the dispersion medium.

The particulate electrode active material and the fibrous filler can be referred to the above-described description related to the electrode active material composite particle according to the present disclosure.

The dispersion medium is not particularly limited as long as the dispersion medium can disperse the particulate electrode active material and the fibrous filler.

The slurry may further include a binder. In this case, the dispersion medium may be able to melt the binder. In other words, the dispersion medium may be a solvent for the binder. The binder can be referred to the above-described description related to the electrode active material composite particle according to the present disclosure.

The slurry may further include a dispersant. The dispersant is not particularly limited, but examples of the dispersant include, for example, 1-decanesulfonic acid sodium salt.

When the filler is fibrous, dispersiveness in the slurry including the filler is low, and thus the aggregate of the fibrous fillers is more likely to be formed in the slurry. Therefore, in order to form the electrode active material composite particle according to the present disclosure including the plurality of aggregates of the fibrous fillers, an amount and a kind of the dispersant used in the slurry, a degree of stirring of the slurry, a kneading method, and the like can be adjusted.

The amount of the dispersant to be used is not particularly limited, but the plurality of aggregates are more likely to be formed by increasing the amount of the dispersant to be used in the slurry. For example, the amount of the dispersant to the fibrous filler may be 0.5 mass% or more, 1 mass% or more, 1.5 mass% or more, 2 mass% or more, 2.5 mass% or more, or 3 mass% or more. The amount of the dispersant may be further added in such a way that the number of the aggregates of the fibrous fillers is a desired number by appropriately checking the number.

### <Composite Particle Formation Step>

The method according to the present disclosure includes drying and removing the dispersion medium by spray drying, and forming the composite particle.

A usual method can be adopted as a method of spray drying.

A drying temperature and the like in spray drying can be adjusted in order to form the electrode active material composite particle according to the present disclosure including the plurality of aggregates of the fibrous fillers.

Spray drying may be performed in a spray dryer in which an inert gas is introduced. As the inert gas, nitrogen, argon, and the like are exemplified, which are not limited thereto.

### <<Electrode mixture>>

The electrode mixture according to the present disclosure includes the electrode active material composite particle. The electrode mixture according to the present disclosure may further include a solid electrolyte, a conductive aid, a binder, and the like.

With regard to the present disclosure, the "electrode mixture" means a composite that can constitute the electrode active material layer by being as it is or further containing the other component. The "electrode mixture" may be a "negative electrode mixture" and a "positive electrode mixture", and may be particularly the "negative electrode mixture".

Further, with regard to the present disclosure, "electrode mixture slurry" means slurry that includes a dispersion medium in addition to the "electrode mixture" and can thus constitute the electrode active material layer by coating and drying.

### <Electrode Active Material Composite Particle>

The electrode active material composite particle can be referred to the above-described description related to the electrode active material composite particle according to the present disclosure.

A content of the electrode active material composite particle in the electrode mixture may be, for example, 30 mass% or more, 40 mass% or more, or 50 mass% or more, and 99 mass% or less, 90 mass% or less, 80 mass% or less, 70 mass% or less, or 60 mass% or less.

### <Solid Electrolyte>

Examples of the solid electrolyte include, for example, inorganic solid electrolytes such as sulfide solid electrolytes, oxide solid electrolytes, nitride solid electrolytes, and halide solid electrolytes, and organic polyelectrolytes such as polymer electrolytes. The solid electrolyte may be particularly a sulfide solid electrolyte.

Examples of the sulfide solid electrolytes having lithium-ion conductivity include, for example, a solid electrolyte containing an Li element, an X element (X is at least one kind of P, As, Sb, Si, Ge, Sn, B, Al, Ga, and In), and an S element. The sulfide solid electrolyte may further contain at least one of an O element and a halogen element. Examples of the halogen element include, for example, an F element, a Cl element, a Br element, and an I element.

Examples of the sulfide solid electrolytes include, for example, Li₂S-P₂S₅, Li₂S-P₂S₅-LiI, Li₂S-P₂S₅-GeS2, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (however, m and n are positive numbers. Z is any of Ge, Zn, and Ga), Li₂S-GeS₂, Li₂S-SiS₂-Li₃PO₄, and Li₂S-SiS₂-LiₓMO_{y} (however, x and y are positive numbers. M is any of P, Si, Ge, B, Al, Ga, and In).

Examples of the oxide solid electrolytes having lithium-ion conductivity include, for example, a solid electrolyte containing an Li element, a Y element (Y is at least one kind of Nb, B, Al, Si, P, Ti, Zr, Mo, W, and S), and an O element. Specific examples include a garnet solid electrolyte such as Li₇La₃Zr₂O₁₂, Li₇₋ₓLa₃(Zr₂₋ₓNbₓ)O₁₂ (0 ≤ x ≤ 2), and Li₅La₃Nb₂O₁₂; a perovskite solid electrolyte such as (Li, La)TiO₃, (Li, La)NbO₃, and (Li, Sr)(Ta, Zr)O₃; a Nasicon solid electrolyte such as Li(Al, Ti)(PO₄)₃ and Li(Al, Ga)(PO₄)₃; an Li-P-O solid electrolyte such as Li₃PO₄ and LIPON (chemical compound acquired by replacing a part of O of Li₃PO₄ with N); and an Li-B-O solid electrolyte such as Li₃BO₃ and a chemical compound acquired by replacing a part of O of Li₃BO₃ with C.

A content of the solid electrolyte in the electrode mixture may be 1 mass% or more, 10 mass% or more, 20 mass% or more, 30 mass% or more, or 40 mass% or more, and may be 70 mass% or less, 60 mass% or less, or 50 mass% or less.

### <Conductive Aid>

Examples of the conductive aid include, for example, carbon materials and metal particles. Specific examples of the carbon materials include, for example, particulate carbon materials such as acetylene black (AB) and Ketjenblack (KB), and fibrous carbon materials such as carbon fibers, carbon nanotubes (CNT), and carbon nanofibers (CNF). Examples of the metal particles can include, for example, nickel, copper, iron, stainless steel, and the like.

A content of the conductive aid in the electrode mixture is not particularly limited, and can be appropriately set in consideration of desired conductivity and the like.

### <Binder>

Examples of the binder include, for example, rubber binders such as butadiene rubber, hydrogenated butadiene rubber, styrene-butadiene rubber (SBR), hydrogenated styrene-butadiene rubber, nitrile-butadiene rubber, hydrogenated nitrile-butadiene rubber, and ethylene-propylene rubber; fluoride binders such as polyvinylidene fluoride (PVDF), polyvinylidene fluoride-hexafluoropropylene copolymers (PVDF-HFP), polytetrafluoroethylene, and fluororubber; polyolefin thermoplastic resin such as polyethylene, polypropylene, and polystyrene; imide resin such as polyimide and polyamide-imide; amide resin such as polyamide; acrylic resin such as polymethyl acrylate and polyethyl acrylate; and methacryl resin such as polymethyl methacrylate and polyethyl methacrylate.

A content of the binder in the electrode mixture is not particularly limited, and can be appropriately set in consideration of desired binding property and the like.

### <Other Component>

The electrode mixture may include a component other than the components described above.

### <<Battery>>

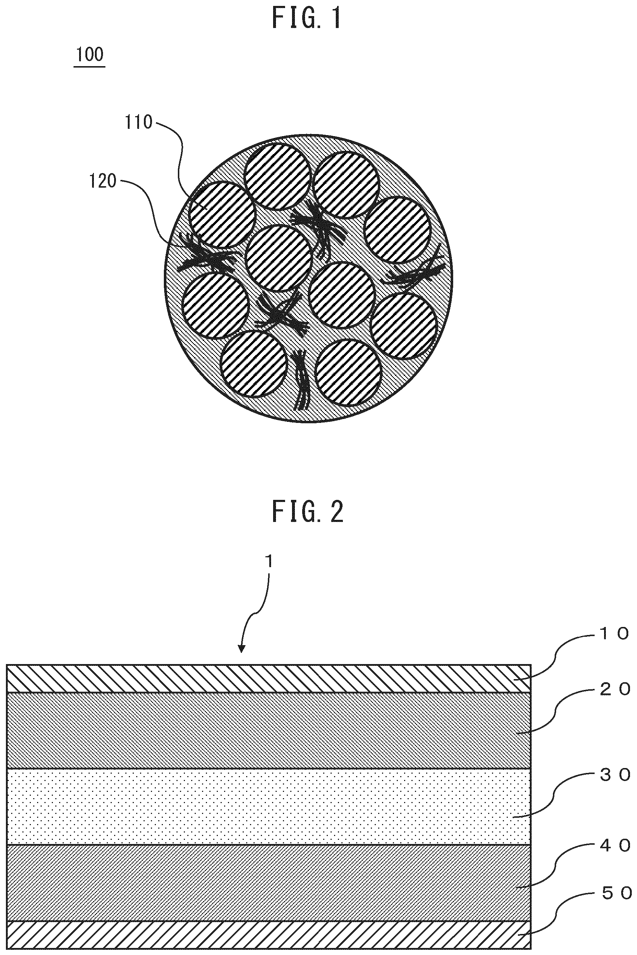

As illustrated in FIG. 1, the battery according to the present disclosure includes the electrode active material layer, and the electrode active material layer contains the electrode mixture according to the present disclosure. The battery according to the present disclosure may include a negative electrode current collector layer, a negative electrode active material layer, an electrolyte layer, a positive electrode active material layer, and a positive electrode current collector layer in this order. In this case, the electrode active material layer containing the electrode mixture according to the present disclosure may be the negative electrode active material layer and the positive electrode active material layer, and may be particularly the negative electrode active material layer.

The battery according to the present disclosure may be a liquid battery or a solid battery. It should be noted that, with regard to the present disclosure, the "solid battery" means a battery using at least a solid electrolyte as an electrolyte, and thus the solid battery may use a combination of the solid electrolyte and a liquid electrolyte as an electrolyte. The solid battery according to the present disclosure may be an all-solid battery, i.e., a battery using only the solid electrolyte as an electrolyte.

The battery according to the present disclosure may be a primary battery and a secondary battery, and may be particularly a lithium-ion secondary battery.

The battery according to the present disclosure can be restrained by a restraining member such as an end plate from both sides in a lamination direction of each of the layers described above. As a restraining method, a method using restraint torque of a bolt and the like are exemplified, which are not limited thereto.

Hereinafter, each element constituting the battery according to the present disclosure will be described. It should be noted that a case where the electrode active material layer containing the electrode mixture according to the present disclosure is the negative electrode active material layer is exemplified below.

### <Negative Electrode Current Collector Layer>

For the negative electrode current collector layer, any general negative electrode current collector layer can be adopted as the negative electrode current collector layer of the battery.

The negative electrode current collector layer may be foil-shaped, plate-shaped, mesh-patterned, a punched metal, a foam, and the like. The negative electrode current collector layer may be a metal foil or a metal mesh, or may be a carbon sheet. Particularly, the metal foil has excellent handleability, and the like. The negative electrode current collector layer may be formed of a plurality of foils and sheets.

Examples of metal constituting the negative electrode current collector layer include, for example, copper, nickel, chromium, gold, platinum, silver, aluminum, iron, titanium, zinc, cobalt, stainless steel, and the like. Particularly, from a viewpoint of securing resistance to reduction and a viewpoint of being less likely to be alloyed with lithium, the negative electrode current collector layer may include a metal of at least one kind selected from copper, nickel, and stainless steel.

The negative electrode current collector layer may include any sort of coating layer on a surface for the purpose of adjusting resistance and the like. The negative electrode current collector layer may be acquired by applying the above-described metal to a metal foil or a base material by plating or vapor deposition. When the negative electrode current collector layer is formed of a plurality of metal foils, any sort of layer may be provided between the plurality of metal foils.

A thickness of the negative electrode current collector layer is not particularly limited, and may be, for example, 0.1 µm or more or 1 µm or more, and 1 mm or less or 100 µm or less.

### <Negative Electrode Active Material Layer>

The negative electrode active material layer includes the electrode mixture according to the present disclosure. The electrode mixture according to the present disclosure can be referred to the above-described description related to the electrode mixture according to the present disclosure.

A thickness of the negative electrode active material layer is not particularly limited, and may be, for example, 0.1 µm or more and 1,000 µm or less.

### <Solid Electrolyte Layer>

The solid electrolyte layer includes at least a solid electrolyte, and may further freely include a binder and the like.

The solid electrolyte and the binder can be referred to the above-described description related to the electrode mixture according to the present disclosure.

A thickness of the solid electrolyte layer is not particularly limited, and may be, for example, 0.1 µm or more and 1,000 µm or less.

### <Positive Electrode Active Material Layer>

The positive electrode active material layer includes at least a positive electrode active material, and may further freely include a solid electrolyte, a conductive aid, a binder, and the like.

Examples of the positive electrode active material layer include, for example, oxide active materials. Examples of the oxide active materials used for a lithium-ion battery include, for example, oxide active materials such as LiCoO₂, LiMnO₂, Li₂NiMn₃O₈, LiVO₂, LiCrO₂, LiFePO₄, LiCoPo₄, LiNiO₂, and LiNi_{1/3}Co_{1/3}Mn_{1/3}O₂. For example, a coating layer containing an Li ion conductive oxide such as LiNbO₃ may be formed on a surface of the active materials.

A content of the positive electrode active material in the positive electrode active material layer may be, for example, 30 mass% or more, 40 mass% or more, or 50 mass% or more, and 99 mass% or less, 90 mass% or less, 80 mass% or less, 70 mass% or less, or 60 mass% or less.

The solid electrolyte, the conductive aid, and the binder can be referred to the above-described description related to the electrode mixture according to the present disclosure.

A thickness of the positive electrode active material layer may be, for example, 0.1 µm or more and 1,000 µm or less.

### <Positive Electrode Current Collector Layer>

For the positive electrode current collector layer, any general positive electrode current collector layer can be adopted as the positive electrode current collector layer of the battery. Further, the positive electrode current collector layer may be foil-shaped, plate-shaped, mesh-patterned, a punched metal, a foam, and the like. The positive electrode current collector layer may be formed of a metal foil or a metal mesh. Particularly, the metal foil has excellent handleability, and the like. The positive electrode current collector layer may be formed of a plurality of foils.

Examples of metal constituting the positive electrode current collector layer include, for example, copper, nickel, chromium, gold, platinum, silver, aluminum, iron, titanium, zinc, cobalt, stainless steel, and the like. Particularly, from a viewpoint of securing resistance to oxidation and the like, the positive electrode current collector layer may include aluminum.

The positive electrode current collector layer may include any sort of coating layer on a surface for the purpose of adjusting resistance and the like. The positive electrode current collector layer may be acquired by applying the above-described metal to a metal foil or a base material by plating or vapor deposition. When the positive electrode current collector layer is formed of a plurality of metal foils, any sort of layer may be provided between the plurality of metal foils.

A thickness of the positive electrode current collector layer is not particularly limited, and may be, for example, 0.1 µm or more or 1 µm or more, and 1 mm or less or 100 µm or less.

### <Other Configuration>

The battery may include each of the above-described configurations housed in an exterior body. For the exterior body, any known exterior body can be adopted as the exterior body of the battery. Further, a plurality of batteries may be freely electrically connected, or may freely overlap to be a group battery. In this case, the group battery may be housed in a known battery case. The battery may additionally include an obvious configuration such as a necessary terminal. Examples of a shape of the battery can include, for example, a coin shape, a laminate (pouch) shape, a cylindrical shape, a square shape, and the like.

### <<Method for Manufacturing Battery>>

A method according to the present disclosure for manufacturing a battery includes manufacturing the electrode active material composite particle according to the present disclosure, and forming the electrode active material layer containing the electrode active material composite particle.

The method for manufacturing the electrode active material composite particle according to the present disclosure can be referred to the above-described description related to the method for manufacturing the electrode active material composite particle according to the present disclosure.

As the method for forming the electrode active material layer containing the electrode active material composite particle, a method for acquiring an electrode mixture by mixing a component material such as an electrode active material composite particle, and performing dry molding or wet molding on the acquired electrode mixture is exemplified.

Particularly, when the battery is a solid battery, the electrode active material layer may be subjected to press molding to be closely packed. The electrode active material layer includes the electrode active material composite particle according to the present disclosure, and thus the void formed in the composite particle is maintained even in such pressing.

The method according to the present disclosure for manufacturing a battery may further include forming an electrode laminated body by laminating a negative electrode current collector layer, a negative electrode active material layer, a solid electrolyte layer, a positive electrode active material layer, and a positive electrode current collector layer in this order.

The other member such as a terminal is attached to the electrode laminated body as necessary. The battery is acquired by housing and hermetically sealing the electrode laminated body in a battery case.

### Examples

### <<Example 1>>

### <Preparation of Electrode Active Material Composite Particle>

Slurry was prepared by dispersing a crystalline silicon (Si) particle (particle diameter: 1 µm) as a particulate electrode active material, a single-layer carbon nanotube (SWCNT) as a fibrous filler, and a dispersant in a solution in which polyvinylidene fluoride (PVDF) as a binder was dissolved in an organic solvent. By drying and removing the organic solvent as a dispersion medium in the prepared slurry by spray drying, a composite particle including the Si particle and SWCNT was formed. The used dispersant was 1-decanesulfonic acid sodium salt. A mass percentage of 1-decanesulfonic acid sodium salt to SWCNT was 3 mass%. A cross-sectional SEM observation of the acquired composite particle was performed, and whether a plurality of aggregates of the fibrous fillers were present was checked. When the plurality of aggregates were not present, an amount of the dispersant was increased by 1 mass% until the plurality of aggregates were present.

### <Production of Negative Electrode Active Material Layer>

The acquired composite particle, the binder, a conductive aid, and a solid electrolyte were added to the organic solvent. Then, kneading was performed by using an ultrasonic homogenizer, and negative electrode mixture slurry was acquired. A negative electrode active material layer was produced by coating a copper (Cu) foil with the acquired negative electrode mixture slurry.

### <Production of Solid Electrolyte Layer>

The binder and the solid electrolyte were added to the organic solvent. Then, kneading was performed by using the ultrasonic homogenizer, and solid electrolyte composite material slurry was acquired. A solid electrolyte layer was produced by coating an aluminum (Al) foil as a peeling sheet with the acquired solid electrolyte composite material slurry. A total of three solid electrolyte layers were produced by the similar procedures.

### <Production of Positive Electrode Active Material Layer>

The binder, the conductive aid, the solid electrolyte, and LiNi_{0.8}Co_{0.15}Mn_{0.05}O₂ as a positive electrode active material were added to the organic solvent. Then, kneading was performed by using the ultrasonic homogenizer, and positive electrode mixture slurry was acquired. A positive electrode active material layer was produced by coating the Al foil with the acquired positive electrode mixture slurry.

### <Production of Evaluation Battery>

Each of the acquired layers was molded into a strip shape. The positive electrode active material layer and the solid electrolyte layer were laminated, and rolled and pressed with pressure of 50 kN/cm at 165°C. The solid electrolyte layer was transferred to the positive electrode active material layer by peeling the Al foil as the peeling sheet from the solid electrolyte layer.

Further, the negative electrode active material layer and the solid electrolyte layer were laminated, and rolled and pressed with pressure of 50 kN/cm at 25°C. The solid electrolyte layer was transferred to the negative electrode active material layer by peeling the Al foil as the peeling sheet from the solid electrolyte layer.

The negative electrode active material layer to which the solid electrolyte layer was transferred and the positive electrode active material layer to which the solid electrolyte layer was transferred were respectively punched into sizes of φ13.00 mm and φ11.28 mm by a punching machine.

The further solid electrolyte layer punched into a predetermined size was transferred onto the solid electrolyte layer laminated on the negative electrode active material layer by using a uniaxial pressing machine. The solid electrolyte layer side of the negative electrode active material layer and the solid electrolyte layer side of the positive electrode active material layer were laminated in such a way as to face each other.

A current extraction tab was attached to the positive electrode active material layer and the negative electrode active material layer, enclosed in an Al laminate by using a vacuum laminate sealer, and restrained with pressure of 5 MPa, and thus an all-solid battery was produced.

### <Evaluation>

### (Observation of Aggregation State of Composite Particle)

The composite particle acquired by spray drying was observed. A group of fibrous fillers having a long side of 0.5 µm or more in a composite particle having a particle diameter of 5 µm or more by a cross-sectional reflection electron image observation at 10,000 magnifications using the scanning electron microscope (SEM) was defined as an aggregate. The number of the aggregates defined in such a manner was counted.

### (Expansion Amount)

Ion milling processing was performed by disassembling and cutting the battery before and after charging/discharging of the produced all-solid battery. A composite electronic image of a processed cross-section was acquired by the scanning electron microscope, and an expansion amount of the electrode active material composite particle according to the present disclosure was calculated based on a thickness of the negative electrode active material layer before and after charging/discharging. The results are shown in Table 1. It should be noted that the expansion amount shown in Table 1 was a relative value in which a value of Comparative Example 1 described below was 100.

### <<Examples 2 to 4>>

Similarly to Example 1 except for a point that a kind of the fibrous filler was changed as described in Table 1, the battery in Examples 2 to 4 was produced and evaluated. The results are shown in Table 1.

### <<Comparative Example 1>>

Similarly to Example 1 except for a point that the fibrous filler was not used, the battery in Comparative Example 1 was produced and evaluated. The results are shown in Table 1.

### <<Reference Example 1>>

The composite particle was formed similarly to Example 3 except for a point that a dispersion state of VGCF as the fibrous filler in the composite particle was changed by adjusting an amount of a dispersant used in slurry during preparation of the electrode active material composite particle, and a kneading method of the slurry, and also adjusting a drying temperature of spray drying. The used dispersant was 1-decanesulfonic acid sodium salt. A mass percentage of 1-decanesulfonic acid sodium salt to VGCF was 0.3 mass%. A cross-sectional SEM observation of the acquired composite particle was performed, and whether one aggregate of the fibrous fillers was present was checked. In other words, the number of aggregates of the fibrous fillers was adjusted by reducing the amount of the dispersant further than that in Example 3. Then, similarly to Example 3, the battery in Reference Example 1 was produced and evaluated. The results are shown in Table 1.

### [Table 1]

**Table 1**

| | PARTICULATE ELECTRODE ACTIVE MATERIAL | FIBROUS FILLER | | | | | | EXPANSION AMOUNT [-] |
|---|---|---|---|---|---|---|---|---|
| | | KIND | MASS PERCENTAGE TO Si PARTICLE [wt%] | FIBER LENGTH [µm] | FIBER DIAMETER [nm] | ASPECT RATIO [-] | NUMBER OF AGGREGATES [-] | |
| COMPARATIVE EXAMPLE 1 | Si PARTICLE | - | - | - | - | - | - | 100 |
| REFERENCE EXAMPLE 1 | Si PARTICLE | VGCF | 10 | 5 | 150 | 33.3 | 1 | 99.8 |
| EXAMPLE 1 | Si PARTICLE | SWCNT | 10 | 5 | 1 | 5,000 | PLURAL | 90.1 |
| EXAMPLE 2 | Si PARTICLE | MWCNT | 10 | 20 | 80 | 250 | PLURAL | 88.2 |
| EXAMPLE 3 | Si PARTICLE | VGCF | 10 | 5 | 150 | 33.3 | PLURAL | 85.7 |
| EXAMPLE 4 | Si PARTICLE | TITANIUM OXIDE | 10 | 5 | 270 | 18.5 | PLURAL | 90.9 |

As shown in Table 1, the expansion amount was reduced in the battery of the examples including the electrode active material composite particle according to the present disclosure further than that in the battery of the comparative example and the reference example.

### <<Examples 5 to 8, Comparative Example 2, and Reference Example 2>>

### <Preparation of Nanoporous Silicon Particle>

0.65 g of Si particles (particle diameter: 1 µm) and 0.60 g of metal lithium (Li) (made by Honjo Metal Co., Ltd.) were put under an argon (Ar) atmosphere and mixed in an agate mortar, and a lithium silicon (LiSi) precursor was acquired. 1.0 g of the acquired LiSi precursor and 125 ml of 1,3,5-trimethylbenzene (made by Nacalai Tesque, Inc.) as a dispersion medium were mixed in a glass reaction vessel under the Ar atmosphere by using an ultrasonic homogenizer (UH-50 made by SMT Co., Ltd.). Then, the acquired LiSi precursor dispersant was cooled to 0°C, 125 ml of ethanol (made by Nacalai Tesque, Inc.) was dropped, and a reaction was caused for 120 minutes. After the reaction, 50 ml of acetic acid (made by Nacalai Tesque, Inc.) was further dropped, and a reaction was caused for 60 minutes. After the reaction, liquid and a solid reactant were separated by suction filtration. The acquired solid reactant was dried in a vacuum for 2 hours at 120°C, and a nanoporous silicon particle as a porous silicon particle was acquired.

Similarly to each of the examples described in Table 1 except for a point that the nanoporous silicon particle was used as the particulate electrode active material, the battery in Examples 5 to 8, Comparative Example 2, and Reference Example 2 was manufactured and evaluated. The results are shown in Table 2. It should be noted that an expansion amount shown in Table 2 was a relative value in which a value of Comparative Example 1 was 100.

### [Table 2]

**Table 2**

| | PARTICULATE ELECTRODE ACTIVE MATERIAL | FIBROUS FILLER | | | | | | EXPANSION AMOUNT [-] |
|---|---|---|---|---|---|---|---|---|
| | | KIND | MASS PERCENTAGE TO Si PARTICLE [wt%] | FIBER LENGTH [µm] | FIBER DIAMETER [nm] | ASPECT RATIO [-] | NUMBER OF AGGREGATES [-] | |
| COMPARATIVE EXAMPLE 2 | POROUS Si PARTICLE | - | - | - | - | - | - | 51.2 |
| REFERENCE EXAMPLE 2 | POROUS Si PARTICLE | VGCF | 10 | 5 | 150 | 33.3 | 1 | 50.9 |
| EXAMPLE 5 | POROUS Si PARTICLE | SWCNT | 10 | 5 | 1 | 5,000 | PLURAL | 45.1 |
| EXAMPLE 6 | POROUS Si PARTICLE | MWCNT | 10 | 20 | 80 | 250 | PLURAL | 44.1 |
| EXAMPLE 7 | POROUS Si PARTICLE | VGCF | 10 | 5 | 150 | 33.3 | PLURAL | 43.5 |
| EXAMPLE 8 | POROUS Si PARTICLE | TITANIUM OXIDE | 10 | 5 | 270 | 19 | PLURAL | 45.1 |

As shown in Table 2, the expansion amount was reduced in the battery of the examples including the electrode active material composite particle according to the present disclosure further than that in the battery of the comparative example.

### <<Examples 9 to 13 and Reference Example 3>>

Similarly to Example 7 except for a point that a content of the fibrous filler to the Si particles was changed as described in Table 3, the battery in Examples 9 to 13 and Reference Example 3 was produced and evaluated. The results are shown in Table 3. It should be noted that an expansion amount shown in Table 3 was a relative value in which a value of Comparative Example 1 was 100.

### [Table 3]

**Table 3**

| | PARTICULATE ELECTRODE ACTIVE MATERIAL | FIBROUS FILLER | | | | | | EXPANSION AMOUNT [-] |
|---|---|---|---|---|---|---|---|---|
| | | KIND | MASS PERCENTAGE TO Si PARTICLE [wt%] | FIBER LENGTH [µm] | FIBER DIAMETER [nm] | ASPECT RATIO [-] | NUMBER OF AGGREGATES [-] | |
| COMPARATIVE EXAMPLE 2 | POROUS Si PARTICLE | - | - | - | - | - | - | 51.2 |
| REFERENCE EXAMPLE 3 | POROUS Si PARTICLE | VGCF | 1 | 5 | 150 | 33.3 | 1 | 51.2 |
| EXAMPLE 9 | POROUS Si PARTICLE | VGCF | 3 | 5 | 150 | 33.3 | PLURAL | 48.8 |
| EXAMPLE 10 | POROUS Si PARTICLE | VGCF | 5 | 5 | 150 | 33.3 | PLURAL | 47.1 |
| EXAMPLE 5 | POROUS Si PARTICLE | VGCF | 10 | 5 | 150 | 33.3 | PLURAL | 45.1 |
| EXAMPLE 11 | POROUS Si PARTICLE | VGCF | 20 | 5 | 150 | 33.3 | PLURAL | 45.6 |
| EXAMPLE 12 | POROUS Si PARTICLE | VGCF | 30 | 5 | 150 | 33.3 | PLURAL | 46.9 |
| EXAMPLE 13 | POROUS Si PARTICLE | VGCF | *50* | 5 | 150 | 33.3 | PLURAL | 48.1 |

As shown in Table 3, the expansion amount was reduced in the battery of the examples including the predetermined amount of the electrode active material composite particle according to the present disclosure further than that in the battery of the comparative example.

### REFERENCE SIGNS LIST

- 1: Battery
- 10: Negative electrode current collector layer
- 20: Negative electrode active material layer
- 30: Electrolyte layer
- 40: Positive electrode active material layer
- 50: Positive electrode current collector layer
- 100: Electrode active material composite particle
- 110: Particulate electrode active material
- 120: Fibrous filler

## Claims

1. An electrode active material composite particle including:
a particulate electrode active material; and
a fibrous filler, wherein
the particulate electrode active material includes an alloy-based electrode active material,
the fibrous filler constitutes a plurality of aggregates, and
the plurality of aggregates and the particulate electrode active material constitute a composite particle.

2. The electrode active material composite particle according to claim 1, wherein
the particulate electrode active material includes a silicon particle.

3. The electrode active material composite particle according to claim 2, wherein
the silicon particle is a porous silicon particle, and
a mass percentage of the fibrous filler to the porous silicon particle is 3 mass% or more and 50 mass% or less.

4. The electrode active material composite particle according to claim 1, wherein
a fiber diameter of the fibrous filler is 1,000 nm or less.

5. The electrode active material composite particle according to claim 1, wherein
a fiber length of the fibrous filler is 100 µm or less.

6. The electrode active material composite particle according to claim 1, wherein
an aspect ratio of the fibrous filler is 5 or more and 10,000 or less.

7. The electrode active material composite particle according to claim 1, wherein
the fibrous filler is fibrous carbon, fibrous elemental metal, a fibrous metal compound, or a combination thereof.

8. The electrode active material composite particle according to claim 7, wherein
the fiber carbon is vapor-grown carbon fiber.

9. The electrode active material composite particle according to claim 1, further including
a binder.

10. An electrode mixture including
the electrode active material composite particle according to claim 1.

11. The electrode mixture according to claim 10 further including
a solid electrolyte.

12. The electrode mixture according to claim 11, wherein
the solid electrolyte is a sulfide solid electrolyte.

13. A battery including
an electrode active material layer, wherein
the electrode active material layer contains the electrode mixture according to any one of claims 10 to 12.

14. The battery according to claim 13, which is a solid battery.

15. A method for manufacturing the electrode active material composite particle according to any one of claims 1 to 9, the method including the following steps:
providing slurry including the particulate electrode active material, the fibrous filler, and a dispersion medium; and
drying and removing the dispersion medium by spray drying, and forming the composite particle.
